# EUROPÄISCHE PATENTSCHRIFT

(11) **EP 2 379 267 B1**
(45) Veröffentlichungstag und Bekanntmachung des Hinweises auf die Patenterteilung: **16.07.2014**
(21) Anmeldenummer: 09796306.0
(22) Anmeldetag: 14.12.2009
(51) Int. Cl.: B23D 55/08

(54) **BANDSÄGE**
BAND SAW
SCIE À RUBAN

(30) Priorität: 19.12.2008 DE 102008063696
(43) Veröffentlichungstag der Anmeldung: 26.10.2011
(73) Patentinhaber: Gebrüder Linck Maschinenfabrik "Gatterlinck" GmbH & Co. KG, 77704 Oberkirch (DE)
(72) Erfinder: RUDOLPH, Joachim, 01069 Dresden (DE); ECKHARDT, Stephan, 01271 Dresden (DE)
(74) Vertreter: Witte, Weller & Partner Patentanwälte mbB
(86) Internationale Anmeldenummer: PCT/EP2009/008926
(87) Internationale Veröffentlichungsnummer: WO 2010/069530

(56) Entgegenhaltungen:
- WO-A1-2007/014979
- DE-A1- 10 116 616
- DE-A1-102007 005 581
- DE-U1- 20 105 845

## Beschreibung

Die Erfindung betrifft eine Bandsäge mit einem in einer Laufrichtung bewegten Bandsägeblatt, gegen das ein Sägegut in einer Vorschubrichtung führbar ist, mit einer Führung für das Bandsägeblatt, wobei die Führung eine Mehrzahl von in ihrer Kraftwirkung einstellbaren Magnetführungselementen aufweist, die eine die Position des Bandsägeblatts im Raum beeinflussende Kraft auf das Bandsägeblatt ausüben.

Eine Bandsäge der vorstehend genannten Art ist aus der DE 10 2007 005 581 A1 bekannt.

Es ist bekannt, dass Bandsägeblätter im Betrieb einer Bandsäge Ausweichbewegungen ausführen, wenn das Sägegut, beispielsweise ein kompletter Baumstamm oder ein Balken oder Brett, in Vorschubrichtung von vorne gegen die gezahnte Seite des Bandsägeblatts geführt wird. Diese Ausweichbewegungen können seitlich zur Vorschubrichtung geneigt sein, oder das Bandsägeblatt kann sich um eine zu seiner Laufrichtung parallele Achse verdrehen. Die Ausweichbewegungen können auch periodisch auftreten, also als Schwingungen mit einer oder mehreren Frequenzen.

Zum Vermeiden derartiger Ausweichbewegungen sind zahlreiche Führungen für das Bandsägeblatt vorgeschlagen worden. Diese Führungen sind zumeist als mechanische Führungen ausgebildet.

In der eingangs genannten DE 10 2007 005 581 A1 sind eine Bandsäge sowie ein Verfahren zum Positionieren eines Bandsägeblatts im Raum beschrieben. Diese bekannte Bandsäge verwendet eine magnetische Führung, bei der mittels Magnetführungselementen eine seitlich zur Vorschubrichtung und zur Laufrichtung gerichtete Magnetkraft auf das Bandsägeblatt ausgeübt wird. Es können dabei in einem Magnetführungselement auch zwei separate Magnete vorgesehen sein, die in Vorschubrichtung nebeneinander angeordnet sind und eine erste Kraft auf einen vorderen Bereich sowie eine zweite Kraft auf einen hinteren Bereich des Bandsägeblatts ausüben. Wenn diese Kräfte ungleich sind, üben sie ein Drehmoment auf das Bandsägeblatt um eine zur Laufrichtung parallele Achse aus. Daher kann man auf diese Weise Torsionen im Bandsägeblatt begegnen.

Im Rahmen der vorliegenden Erfindung wurde nun festgestellt, dass mit der vorstehend beschriebenen Vorgehensweise zwar wesentliche Beiträge zur Stabilisierung und zur Einhaltung der Soll-Sägerichtung eines Bandsägeblatts geleistet werden können, dass es aber darüber hinaus noch Bewegungskomponenten höherer Ordnung gibt, deren Beitrag zur Instabilität des Bandsägeblatts umso mehr ins Gewicht fällt, je höher die Laufgeschwindigkeit des Bandsägeblatts ist. Diese Bewegungskomponenten bestehen beispielsweise aus wellenförmigen Bewegungen in Laufrichtung des Bandsägeblatts.

In der Druckschrift DE 201 05 845 U1 ist eine magnetische Bandsägepositioniervorrichtung beschrieben. Diese Vorrichtung besteht im Wesentlichen aus einer U-förmigen Führung, deren Schenkel sich beidseits des zu positionierenden Bandsägeblatts erstrecken. Die Führung ist insgesamt über Federn in Vorschubrichtung des Sägeguts gegen ein maschinenfestes Lager abgestützt. In die beiden Schenkel der Führung sind jeweils zwei parallele Reihen von einander gegenüber stehenden Magneten, offensichtlich von Permanentmagneten, eingelassen, wobei sich die Reihen parallel zur Längsrichtung des Bandsägeblatts erstrecken. Die eine Reihe ist neben dem Zahngrund der Zähne des Bandsägeblatts und die andere Reihe ist neben den hinteren Kanten einer in Längsrichtung durchgehenden Sägeblattlochung positioniert. Über die Polarisierung der Magnete und deren Wechselwirkung mit dem Bandsägeblatt ist in der Druckschrift nichts angegeben. Die Schenkel der Führung sind so lang dimensioniert, und die Führung ist relativ zum Bandsägeblatt so positioniert, dass die Rückseite des Bandsägeblatts einen Abstand von dem die Schenkel verbindenden Flansch einhält. Dadurch kann das Bandsägeblatt bei großen Vorschubkräften trotz der Wirkung der Magnete etwas in Vorschubrichtung verschoben werden, wobei schließlich auch die federnde Abstützung der Führung begrenzend wirkt. Die Führung bewirkt ausschließlich eine Abstützung des Bandsägeblatts entgegen der Vorschubrichtung und wirkt daher nur der wenig kritischen Ausweichbewegung des Bandsägeblatts in Vorschubrichtung entgegen. Seitliche Ausweichbewegungen und ein Verdrehen des Bandsägeblatts werden durch die bekannte Führung nicht verhindert, die daher zur Verbesserung der Qualität der Sägeschnitte hinsichtlich Maßhaltigkeit und Oberflächengüte nichts beiträgt.

Der Erfindung liegt die Aufgabe zugrunde, eine Bandsäge der eingangs genannten Art dahingehend weiterzubilden, dass die vorgenannten Probleme beseitigt oder zumindest so weit als möglich minimiert werden. Insbesondere soll eine Bandsäge zur Verfügung gestellt werden, bei der auch Bewegungskomponenten höherer Ordnung wirksam kompensiert werden können.

Bei einer Bandsäge der eingangs genannten Art wird diese Aufgabe erfindungsgemäß dadurch gelöst, dass stromaufwärts und/oder stromabwärts des Sägeguts angeordnete Magnetführungselemente in Laufrichtung gesehen nebeneinander mindestens zwei Magnete aufweisen.

Die der Erfindung zugrunde liegende Aufgabe wird auf diese Weise vollkommen gelöst.

Bei einer bevorzugten Weiterbildung der Erfindung weist die Führung in an sich bekannter Weise Magnetführungselemente beidseits des Bandsägeblatts auf.

Weiterhin ist bevorzugt, wenn die Führung Paare von in Vorschubrichtung nebeneinander angeordneten Magnetführungselementen aufweist.

Diese Maßnahmen haben den Vorteil, dass die Vorteile bekannter magnetischer Lageregelungen mit den oben beschriebenen Vorteilen verbunden werden können.

Weitere Vorteile ergeben sich aus der Beschreibung und der beigefügten Zeichnung.

Ausführungsbeispiele der Erfindung sind in der Zeichnung dargestellt und werden in der nachfolgenden Beschreibung näher erläutert. Es zeigen:
- Figur 1:: eine schematisierte Vorderansicht eines Ausführungsbeispiels einer erfindungsgemäßen Bandsäge;
- Figur 2:: in stark vergrößertem Maßstab eine Seitenansicht auf ein Bandsägeblatt der Bandsäge von Figur 1 sowie ein Magnetführungselement gemäß der vorliegenden Erfindung; und
- Figur 3:: eine Ansicht von oben entlang der Linie III-III von Figur 2.

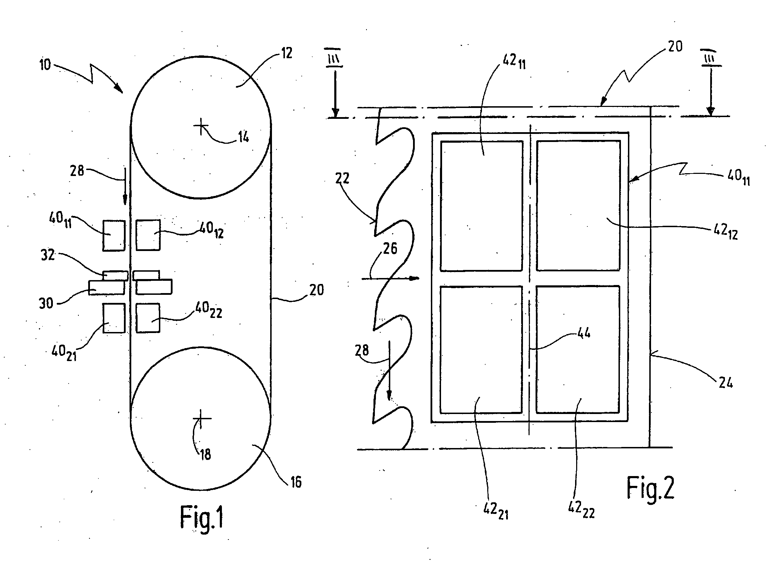

In Figur 1 bezeichnet 10 als Ganzes eine Bandsäge von an sich bekannter Bauart, Die Bandsäge 10 weist eine obere Rolle 12 mit oberer Achse 14 und eine untere Rolle 16 mit unterer Achse 18 auf. Um die Rollen 12, 16 ist ein Bandsägeblatt 20 geführt.

Wie in Figur 2 gezeigt, hat das Bandsägeblatt 20 eine vordere, gezahnte Seite 22 sowie eine hintere, glatte Seite 24. Es versteht sich jedoch, dass die Erfindung auch bei beidseitig gezahnten Bandsägeblättern einsetzbar ist. Mit einem Pfeil 26 ist die Vorschubrichtung zwischen dem Bandsägeblatt 20 und einem Sägegut bezeichnet und mit einem Pfeil 28 die Laufrichtung des Bandsägeblatts 20. Die Vorschubrichtung 26 verläuft im dargestellten Ausführungsbeispiel horizontal und senkrecht zur Zeichenebene der Figur 1. Die Laufrichtung 28 verläuft vertikal. Auch hier versteht sich jedoch, dass die Erfindung nicht auf diese Richtungen beschränkt ist.

Auf einem Sägetisch 30 liegt ein Sägegut 32 auf, beispielsweise ein Brett. Das Bandsägeblatt 20 läuft in der üblichen Weise durch eine entsprechende Aussparung im Sägetisch 30 und das Sägegut 32 wird in der Vorschubrichtung 26 mit einer gewissen Kraft gegen die gezahnte Seite 22 des Bandsägeblatts 20 geführt.

Wenn das Bandsägeblatt 20 in Eingriff mit dem Sägegut 32 gelangt, kann es zu Ausweichbewegungen des Bandsägeblatts 20 kommen. Diese Ausweichbewegungen können kontinuierlich oder diskontinuierlich sein. Wenn das Sägegut 32 versehentlich schräg gegen das Bandsägeblatt 20 geführt wird, reagiert das Bandsägeblatt 20 mit einer kontinuierlichen Ausweichbewegung, es verläuft. Wenn das Bandsägeblatt 20 im Sägegut 32 auf eine Diskontinuität trifft, beispielsweise einen Ast oder einen Knoten, dann weicht das Bandsägeblatt 20 diskontinuierlich aus.

Weiterhin kann das Bandsägeblatt 20 in Schwingungen geraten, insbesondere in Torsionsschwingungen um eine zur Laufrichtung 28 parallele Achse oder in Längsschwingungen entlang einer solchen Achse. Derartige Schwingungen treten insbesondere bei hohen Laufgeschwindigkeiten des Bandsägeblatts 20 auf. Auch Eigenresonanzen der Bandsäge 10 und das periodische Vorbeilaufen von Diskontinuitäten im Bandsägeblatt 20, beispielsweise des Stoßes, an raumfesten Führungen können derartige Schwingungen auslösen.

Um diesem sehr komplexen Bewegungsgeschehen zu begegnen, sind bei dem dargestellten bevorzugten Ausführungsbeispiel zunächst in an sich bekannter Weise vier Magnetführungselemente vorgesehen, nämlich in der Darstellung der Figur 1 und relativ zum Sägegut 32 ein erstes Magnetführungselement 40₁₁ oben links, ein zweites Magnetführungselement 40₁₂ oben rechts, ein drittes Magnetführungselement 40₂₁ unten links, sowie ein viertes Magnetführungselement 40₂₂ unten rechts. Die Magnetführungselemente 40₁₁/40₁₂ bzw. 40₂₁/40₂₂ befinden sich dabei beidseits des Bandsägeblatts 20, insbesondere auf derselben Höhe, und die Magnetführungselement 40₁₁/40₂₁ bzw. 40₁₂/40₂₂ befinden sich oberhalb und unterhalb des Sägeguts 32.

Insoweit versteht sich, dass alternativ auch nur ein Paar Magnetführungselemente rechts/links und/oder nur ein Paar Magnetführungselemente oben/unten verwendet werden kann, wobei ggf. die dann fehlenden Magnetführungselemente durch mechanische Führungen, insbesondere maschinenfeste Führungsblöcke, ersetzt werden können. Das Bandsägeblatt 20 kann auch, wie dargestellt, als Tangente zu den Rollen 12, 16 geführt werden oder alternativ im seitlichen Abstand zu einer solchen Tangente, wobei das Bandsägeblatt 20 dann im Ruhezustand unter einer mechanischen Vorspannung steht. Einzelheiten zu derartigen Varianten sind in der bereits erwähnten DE 10 2007 005 581 A1 beschrieben, auf die verwiesen wird.

Erfindungsgemäß sind in Magnetführungselementen, vorzugsweise in allen Magnetführungselementen 40₁₁, 40₁₂, 40₂₁, 40₂₂ jeweils vier Magnete untergebracht, wie in Figur 2 anhand des Magnetführungselements 40₁₁ dargestellt. In der Darstellung der Figur 2 sind dies ein erster Magnet 42₁₁ links oben, ein zweiter Magnet 42₁₂ rechts oben, ein dritter Magnet 42₂₁ links unten, sowie ein vierter Magnet 42₂₂ rechts unten. Die Magnete 42₁₁, 42₂₁, 42₁₂ und 42₂₂ liegen somit auf den Ecken eines gedachten Rechtecks. Sie sind individuell ansteuerbar. Die Magnete 42₁₁ und 42₂₁ sind also, ebenso wie die Magnete 42₁₂ und 42₂₂ in Laufrichtung 28 nebeneinander angeordnet und die Magnete 42₁₁ und 42₁₂, ebenso wie die Magnete 42₂₁ und 42₂₂ in Vorschubrichtung 26 nebeneinander. Im dargestellten Ausführungsbeispiel läuft das Bandsägeblatt 20 folglich bei jedem der Magnetführungselemente 40₁₁ - 40₂₂ an insgesamt vier Magneten vorbei. Vorzugsweise befinden sich die Magnete der Magnetpaare 42₁₁/42₁₂ und 42₂₁/42₂₂ jeweils im vorderen und im hinteren Bereich des Bandsägeblatts 20. Die Magnetführungselemente 40₁₁ und 40₁₂ bzw. 40₂₁, 40₂₂ sind vorzugsweise jeweils dicht oberhalb bzw. unterhalb des Sägeguts 32 angeordnet.

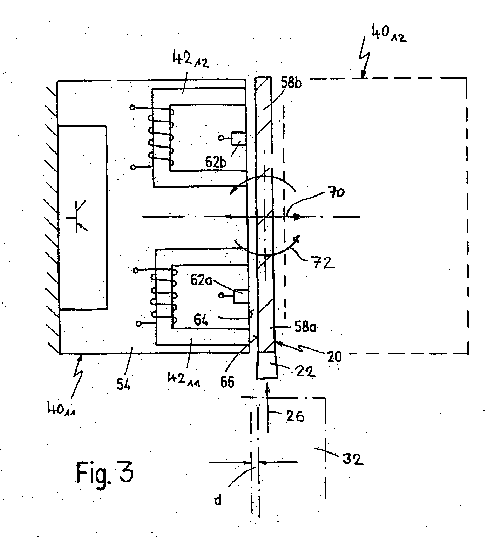

Die in Vorschubrichtung 26 nebeneinander angeordneten Magnete 42₁₁/42₁₂ bzw. 42₂₁/42₂₂ üben bei unterschiedlicher Ansteuerung in an sich bekannter Weise ein Drehmoment auf das Bandsägeblatt 20 um die in Figur 2 eingezeichnete Achse 44 aus, die parallel zur Laufrichtung 28 verläuft, wie anhand der Figur 3 noch näher erläutert werden wird.

Die in Laufrichtung 28 nebeneinander angeordneten Magnete 42₁₁/42₂₁ bzw. 42₁₂/42₂₂ hingegen wirken ungleichförmigen Bewegungen des Bandsägeblatts 20 entlang der Laufrichtung entgegen, insbesondere Schwingungen, die sich in Laufrichtung 28 ausbreiten.

Es versteht sich, dass die in Vorschubrichtung 26 nebeneinander angeordneten Magnetpaare 42₁₁/42₁₂ bzw. 42₂₁/42₂₂ zwar zweckmäßig und bevorzugt, für die Erfindung aber nicht zwingend notwendig sind. Die Magnete können vielmehr auch nur auf einer Seite des Bandsägeblatts 20 angeordnet sein.

Figur 3 zeigt in einer Ansicht entlang der Linie III-III von Figur 2.

Das Magnetführungselement 40₁₁ weist ein Gehäuse 54 auf. In dem Gehäuse 54 erkennt man den ersten, vorderen Elektromagneten 42₁₁ und den zweiten, hinteren Elektromagneten 42₁₂, die einem vorderen Bereich 58a bzw. einem hinteren Bereich 58b des Sägeblatts 20 gegenüberstehen. Die Begriffe "vorderer" und "hinterer" beziehen sich dabei auf die Vorschubrichtung 26 des Sägegutes 32, beispielsweise eines Holzbretts. Darunter befinden sich der dritte und der vierte Elektromagnet 42₂₁ und 42₂₂.

Die Elektromagnete 42₁₁ - 42₂₂ sind vorzugsweise baugleich. Die in Figur 3 angedeutete Bauart mit U-förmigem Joch ist selbstverständlich nur als Beispiel zu verstehen. Prinzipiell können hier alle Bauelemente verwendet werden, die es gestatten, auf das Bandsägeblatt 20 berührungslos eine einstellbare Kraft auszuüben.

Da in jedem Magnetführungselement 40₁₁ - 40₂₂ vier Elektromagnete 42₁₁ - 42₂₂ verwendet werden, hat die Gesamtanordnung mit zwei übereinander angeordneten Magnetführungselementen (Figur 1) also insgesamt acht derartige Elektromagnete bzw. sechzehn, wenn jeweils zwei Paare von übereinander angeordneten Magnetführungselementen 40₁₁/40₂₁ bzw. 40₁₂/40₂₂ auf beiden Seiten des Bandsägeblatts 20 verwendet werden.

Dem vorderen Elektromagneten 42₁₁ ist ein vorderer Sensor 62a und dem hinteren Elektromagnet 42₁₂ ist ein hinterer Sensor 62b zugeordnet. Die unteren Elektromagnete 42₂₁ und 42₂₂ sind entsprechend beschaltet. Die Sensoren 62a, 62b können einen Abstand auf magnetische, kapazitive, optische, akustische oder sonstige Art erfassen. Sie messen in der Magnetführung einen Abstand d zwischen der in Figur 3 rechten Oberfläche 64 des Magnetführungselements 40₁₁ und der in Figur 3 linken Oberfläche 66 des Bandsägeblatts 20 in dessen vorderen Bereich 58a bzw. hinteren Bereich 58b.

Wenn die Elektromagnete 42₁₁ und 42₁₂ mit der gleichen Stromstärke erregt werden, d.h. die gleiche Magnetkraft auf die Bereiche 58a und 58b ausüben, dann wird das Bandsägeblatt 20 in der Darstellung von Figur 3 unter Beibehaltung seiner Ausrichtung nach links oder nach rechts verstellt, wie mit einem Doppelpfeil 70 angedeutet. Wenn die Magnetkräfte der Elektromagneten 42₁₁ und 42₁₂ hingegen unterschiedlich sind, dann wird das Bandsägeblatt 20 um seine Mittelachse verdreht, wie mit einem Paar von Pfeilen 72 angedeutet. Auf diese Weise ist es möglich, das Bandsägeblatt 20 schräg zur Vorschubrichtung 26 des Sägeguts 32 anzustellen. Man kann dann schräge oder bogenförmige Sägeschnitte im Sägegut 32 führen, beispielsweise dann, wenn das Sägegut 32 in Vorschubrichtung 26 konisch bzw. gekrümmt ist, wie dies bei natürlich gewachsenen Baumstämmen bzw. Teilen davon der Fall ist.

Entsprechend wirken die untereinander angeordneten Magnetpaare 42₁₁/42₂₁ und 42₁₂/42₂₂ auf das Bandsägeblatt 20 ein. Durch unterschiedliche Ansteuerung können Wellen im Bandsägeblatt 20, die sich in der Laufrichtung 28 ausbreiten, ausgelöscht werden.

Man kann daher durch selektive Ansteuerung der Elektromagnete 42₁₁ - 42₂₂ eine seitliche Ausweichbewegung und ein Verdrehen des Bandsägeblatts 20 ebenso kompensieren wie eine Ausbreitung von Wellen in der Laufrichtung 28. Dies ist insbesondere zweckmäßig, wenn das Sägegut 32 mit hoher Kraft in Vorschubrichtung 26 gegen die gezahnte Seite 22 des Bandsägeblatts 20 geführt wird und das Bandsägeblatt 20 dann wegknickt, oder wenn das Bandsägeblatt 20 in inhomogene Bereiche des Sägeguts 32 gerät, beispielsweise in Äste in einem Holzbrett.

Bei der Anordnung gemäß Figur 1 wird die Regelung der seitlichen Lage des Bandsägeblatts 20 durch selektive Ansteuerung der Magnetführungen 40₁₁/40₁₂ bzw. 40₂₁/40₂₂ auf beiden Seiten des Bandsägeblatts 20 bewirkt. Das Bandsägeblatt erstreckt sich in diesem Falle entlang einer gemeinsamen Tangente beider Rollen 12 und 14, so wie in Figur 1 dargestellt.

Alternativ können die Magnetführungselemente aber auch nur auf einer Seite des Bandsägeblatts vorgesehen sein und das Bandsägeblatt liegt auf der anderen Seite in an sich bekannter Weise im Ruhezustand unter Spannung auf maschinenfesten Führungsblöcken auf, wie beispielsweise in Fig. 1 der DE 10 2007 005 581 A1 dargestellt. Dann liegt das Bandsägeblatt im Ruhezustand, d.h. bei nicht vorhandener Magnetkraft, beispielsweise durch herkömmliches mechanisches Einstellen einer gewissen seitlich gerichteten Vorspannkraft von etwa 100 bis 1.000 N, beispielsweise 600 N, auf den maschinenfesten Führungsblöcken auf. Unmittelbar vor oder beim Anfahren der Bandsäge wird das Bandsägeblatt dann durch eine im Vergleich zur mechanischen Vorspannkraft von beispielsweise 600 N höhere Magnetkraft von beispielsweise 700 N von den Führungsblöcken abgehoben, bis es eine Sollstellung zwischen den Führungsblöcken und den Magnetführungselementen einnimmt. In dieser Sollstellung wird das Bandsägeblatt berührungslos geführt. Die Positionsregelung wird dann um diese Soll-Magnetkraft von 700 N herum durch Modulation, d.h. durch Verminderung oder durch Erhöhung der Magnetkraft durchgeführt.

## Patentansprüche

1. Bandsäge mit einem in einer Laufrichtung (28) bewegten Bandsägeblatt (20), gegen das ein Sägegut (32) in einer Vorschubrichtung (26) führbar ist, mit einer Führung für das Bandsägeblatt (20), wobei die Führung eine Mehrzahl von in ihrer Kraftwirkung einstellbaren Magnetführungselementen (40₁₁, 40₁₂, 40₂₁, 40₂₂) aufweist, die eine die Position des Bandsägeblatts (20) im Raum beeinflussende Kraft auf das Bandsägeblatt (20) ausüben, **dadurch gekennzeichnet, dass** stromaufwärts und/oder stromabwärts des Sägeguts (32) angeordnete Magnetführungselemente (40₁₁, 40₁₂, 40₂₁, 40₂₂) in Laufrichtung (28) gesehen nebeneinander mindestens zwei Magnete (42₁₁/42₂₁, 42₁₂/42₂₂) aufweisen.

2. Bandsäge nach Anspruch 1, **dadurch gekennzeichnet, dass** die Führung Magnetführungselemente (40₁₁/40₁₂, 40₂₁/40₂₂) beidseits des Bandsägeblatts (20) aufweist.

3. Bandsäge nach Anspruch 1 oder 2, **dadurch gekennzeichnet, dass** die Führung Paare von in Vorschubrichtung (26) nebeneinander angeordneten Magnetführungselementen (42₁₁/42₁₂, 42₂₁/42₂₂) aufweist.

## Claims

1. A band saw comprising a band saw blade (20) moved along a running direction (28), a sawing material (32) adapted to be guided against the band saw blade (20) in a feed direction (26), and a guide for the band saw blade (20), wherein the guide has a plurality of magnet guide elements (40₁₁, 40₁₂, 40₂₁, 40₂₂) being adjustable in their force and exerting a force on the band saw blade (20) for influencing its position in space, **characterized in that** magnet guide elements (40₁₁, 40₁₂, 40₂₁, 40₂₂) positioned upstream and/or downstream of the sawing material (32) have at least two magnets (42₁₁/42₂₁, 42₁₂/42₂₂) one beside another, as seen along the running direction (28).

2. The band saw of claim 1, **characterized in that** the guide comprises magnet guide elements (40₁₁/40₁₂, 40₂₁/40₂₂) on both sides of the band saw blade (20).

3. The band saw of claim 1 or 2, **characterized in that** the guide comprises pairs of magnet guide elements (40₁₁, 40₁₂, 40₂₁, 40₂₂) positioned one beside another in the feed direction (26).

## Revendications

1. Scie à ruban comprenant une lame de scie à ruban (20) déplacée dans une direction d'avance (28), contre laquelle un produit à scier (32) peut être guidé dans une direction d'avance (26), comprenant un guide pour la lame de scie à ruban (20), le guide présentant une pluralité d'éléments de guidage magnétiques (40₁₁, 40₁₂, 40₂₁, 40₂₂) dont l'effet de force peut être ajusté, lesquels exercent une force sur la lame de scie à ruban (20) influençant la position de la lame de scie à ruban (20) dans l'espace, **caractérisée en ce que** des éléments de guidage magnétiques (40₁₁, 40₁₂, 40₂₁, 40₂₂) disposés en amont et/ou en aval du produit à scier (32), vus dans la direction d'avance (28), présentent les uns à côté des autres au moins deux aimants (42₁₁/42₂₁, 42₁₂/42₂₂).

2. Scie à ruban selon la revendication 1, **caractérisée en ce que** le guide présente des éléments de guidage magnétiques (40₁₁/40₁₂, 40₂₁/40₂₂) de chaque côté de la lame de scie à ruban (20).

3. Scie à ruban selon la revendication 1 ou 2, **caractérisée en ce que** le guide présente des paires d'éléments de guidage magnétiques (42₁₁/42₁₂, 42₂₁/42₂₂) disposés les uns à côté des autres dans la direction d'avance (26).
